# EUROPEAN PATENT APPLICATION

(11) **EP 2 095 748 A1**
(43) Date of publication of application: **02.09.2009**
(21) Application number: 09002825.9
(22) Date of filing: 27.02.2009
(51) Int. Cl.: A47J 31/44

(54) **Device for preparing a hot beverage**

(30) Priority: 29.02.2008 NL 2001341
(71) Applicant: KISS V.o.f., 8077 SN Hulshorst (NL)
(72) Inventor: Bakker, Joannes Petrus, 8077SN Hulshorst (NL); Kivits, Adrianus Antonius Wilhelmus, 8077 SN Hulshorst (NL)
(74) Representative: Jilderda, Anne Ayolt

(57) **Abstract**

A device 1 for preparing a hot beverage comprises a preparation device 2 with a preparation chamber for receiving a starting product therein. The preparation chamber comprises an inlet for a liquid which during operation is introduced at increased temperature into the preparation chamber with the starting product, and an outlet for receiving thereat during operation a beverage formed from the starting product and the liquid. The starting product can be placed in the preparation chamber together with at least one product container. The device comprises a bottom part 3 for the purpose of supporting therewith on a surface. The bottom part 3 is coupled to a container member comprising a manually openable chamber. The chamber is adapted to receive at least the at least one product container therein. A device 1 is thus provided in which at least one product container can be stored, so that the product container is always available.

## Description

The present invention relates to a device for preparing a hot beverage, comprising a preparation chamber for receiving a starting product therein, which preparation chamber comprises an inlet for a liquid which during operation is introduced at increased temperature into the preparation chamber with the starting product, and with an outlet for receiving thereat during operation a beverage formed from the starting product and the liquid, wherein the starting product can be placed in the preparation chamber together with at least one product container, and comprising a bottom part for the purpose of supporting therewith on a surface.

A known device of the type stated in the preamble is a coffee-making machine in which a pouch filled with ground coffee beans, a so-called coffee pad, is used to prepare a cup of coffee. The known device comprises a preparation chamber in which the coffee pad can be placed on a pouch holder. The coffee-making machine is intended and adapted to introduce water via an inlet into the preparation chamber during operation and guide it through the coffee pad in heated state in order to prepare a cup of coffee. After each preparation of a cup of coffee a used coffee pad must be removed from the preparation chamber before a new, fresh coffee pad can be arranged therein for the purpose of making another cup of coffee.

Although the known device provides a relatively rapid and simple method of preparing coffee, the known device does however have the drawback that both pouch holder and coffee pad, probably because they are separate elements, are often temporarily mislaid and can sometimes even be permanently lost. Keeping these individual elements in a separate, individual storage means intended for the purpose cannot prevent the storage means then in turn being temporarily mislaid or permanently lost. Such a storage means moreover takes up at least part of an often limited amount of cabinet or surface space, and this is undesirable.

The present invention has for its object, among others, to provide a device which obviates the above stated drawback.

In order to achieve the stated object a device of the type stated in the preamble has the feature according to the invention that the bottom part is coupled to a container member having at least in cross-section at least substantially the same form, that the container member comprises at least one manually openable chamber, and that the at least one chamber is adapted to receive at least the at least one product container therein. Because the bottom part is coupled to a container member with an openable chamber, the invention thus provides a device in which at least the at least one product container can be received, so that this latter is always readily available and loss thereof is prevented. It is optionally also possible to choose to have the container member function as a temporary waste container in which used product containers can be held. The container member with a plurality of used product containers therein can thus be emptied into a permanent waste bin in one operation, instead of each used product container having to be discarded separately in the permanent waste bin.

A first preferred embodiment of the device according to the invention is characterized in that the product container comprises a disposable pouch in which the starting product is enclosed. A further preferred embodiment of the device according to the invention is characterized in that the product container comprises a reusable filter device.

A further preferred embodiment of the device according to the invention is characterized in that the container member is coupled for manual release to the bottom part. It is hereby possible to vary the container member as desired. The container member can thus eventually be replaced by a new container member differing for instance in shape, size or colour.

A further preferred embodiment of the device according to the invention is characterized in that the container member comprises a drawer element with the at least one chamber, wherein the drawer element is manually slidable between a mutually coupled position of the drawer element and another part of the container member and an at least partially released position. The drawer element provides a relatively simple way of receiving at least the at least one product container therein and of moving it from the mutually coupled position to the at least partially released position, and vice versa.

A further preferred embodiment of the device according to the invention has the feature that the container member comprises spring means for carrying the drawer element in driven manner from the mutually coupled position to the at least partially released position. It thus requires relatively little effort to move the drawer element to the at least partially released position.

A further preferred embodiment of the device according to the invention has the feature that locking means are provided between the container member and the bottom part for mutual locking thereof. The possibility of undesired separation of the container member from the bottom part is thus prevented.

A further preferred embodiment of the device according to the invention has the feature that in a mutually coupled position of the container member and the bottom part the at least one chamber is closed in at least substantially wholly airtight and leak-proof manner. A product container received in the at least one chamber thus remains stored in airtight manner, whereby it remains fresh for a long period, particularly in the case the product container is a disposable pouch with starting product yet to be used.

A further preferred embodiment of the device according to the invention has the feature that the container member comprises closing means for the purpose of closing the at least one chamber in at least substantially wholly airtight and leak-proof manner. A product container received in the at least one chamber is thus prevented from being able to escape from the chamber, also in the at least partially released position. Furthermore, the product container hereby does not come into contact with the bottom part. This is particularly hygienic in the case the product container is a disposable pouch with a starting product yet to be used.

A further preferred embodiment of the device according to the invention has the feature that the container member is washable. Residues possibly left in the at least one chamber, particularly residues of a starting product received in a disposable pouch, can thus be washed out in relatively simple manner, so that the container member can then be reused in clean state.

A further preferred embodiment of the device according to the invention has the feature that the container member comprises at least one further chamber for receiving at least one further product container. A plurality of product containers, such as for instance a reusable filter device and disposable pouches filled with a starting product, can thus be received individually in the container member.

A further preferred embodiment of the device according to the invention has the feature that at least two container members are provided for the purpose of receiving individual further product containers. A plurality of product containers, such as for instance a reusable filter device and disposable pouches filled with a starting product, can thus be received individually in the at least two container members, and these container members can be used independently of each other.

A further preferred embodiment of the device according to the invention has the feature that the container member comprises at least one gripping element on a front side. The gripping element provides a gripping point for carrying the container member easily and quickly from a position coupled to the bottom part to an at least partially released position.

A further preferred embodiment of the device according to the invention has the feature that the container member is provided on an underside with means which limit sliding, in particular anti-slip studs. Such means prevent the container member from shifting. The device thus remains in position, even when the container member is carried from a position in which it is coupled to the bottom part to an at least partially released position.

The invention further relates to a container member for application in the device according to the invention.

The invention will now be further elucidated on the basis of a number of exemplary embodiments and an accompanying drawing. In the drawing:
- Figure 1: shows a perspective view of an exemplary embodiment of a device according to the invention.
- Figures 2A,B: show respectively a top view and a front view of an exemplary embodiment of a container member for application in a device according to the invention.

The figures are otherwise purely schematic and not drawn to scale. Some dimensions in particular may be exaggerated to a greater or lesser extent for the sake of clarity. Corresponding parts are designated as far as possible in the figures with the same reference numeral.

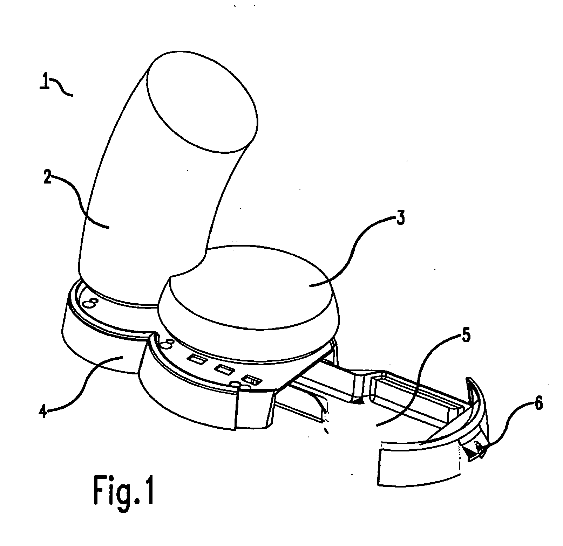

Figure 1 shows a perspective view of an exemplary embodiment of a device according to the invention. As shown in figure 1, the device 1 for preparing a hot beverage comprises a preparation device 2 with a preparation chamber (not shown) in which a product container can be placed. The product container can comprise a disposable pouch containing a starting product such as for instance an ingredient chosen from a group of ground coffee beans, ground tea leaves, tea leaves or a cocoa product. The product container can also comprise a reusable filter device in which a starting product can be directly enclosed or, alternatively, on which a disposable pouch filled with starting product can be placed. Coffee-making machine 2 is intended and adapted during use to introduce water into the preparation chamber via an inlet (not shown) and to release it under pressure and in heated state on a top side of the product container and guide it therethrough in order to extract a starting product contained therein and prepare a hot beverage. The water can be drawn into the device from a water reservoir intended for this purpose. The hot beverage is released at an outlet (not shown) and can be collected in a drinking element, such as for instance a drinking cup, intended for this purpose.

Device 1 comprises a bottom part 3 with which device 1 can support on a surface. A container member 4 with the same cross-sectional form is coupled to bottom part 3 on an underside of bottom part 3. Container member 4 is here coupled in manually releasable manner so as to enable replacement of container member 4 by another container member. In order to prevent the possibility of container member 4 being detached from bottom part 3, for instance during displacement of device 1, locking means (not shown) can be provided between container member 4 and bottom part 3 for mutual locking thereof. Container member 4 comprises a manually openable chamber 5 in which at least one product container can be received. Container member 4 is provided on a front side with a gripping element 6 so that container member 4 can be moved easily and quickly from a position in which it is coupled to bottom part 3 to an at least partially released position. In the mutually coupled position chamber 5 is closed in airtight and leak-proof manner in order to keep fresh for longer a product container received therein, such as for instance a disposable pouch filled with an ingredient.

The invention thus provides a device 1 in which at least a product container can be stored, so that the product container is always available. It is moreover unnecessary to apply a separate, individual storage means for the product container, so that a cabinet or surface space otherwise taken up hereby remains free.

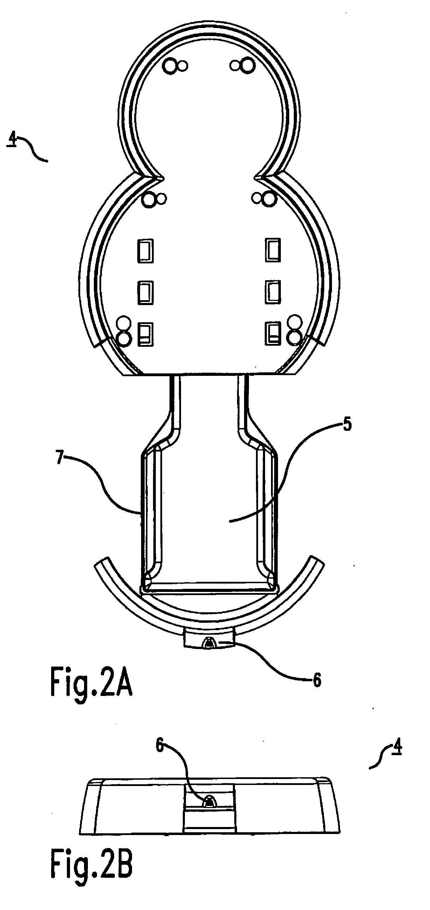

Figures 2A and 2B show respectively a top view and a front view of an exemplary embodiment of a container member for applying in a device according to the invention. As figures 2A and 2B show, container member 4 comprises a drawer element 7 with a manually openable chamber 5 coupled slidably to another part of container member 4. Drawer element 7 is provided on a front side with a gripping element 6, such as for instance a gripping handle. By gripping on gripping element 6 the drawer element 7 can be pulled manually in relatively simple manner from a mutually coupled position of drawer element 7 and another part of container member 4 to an at least partially released position. In order to move chamber 5 in extremely simple manner to a released position, container member 4 can be provided with spring means (not shown) for the purpose of carrying drawer element 7 in driven manner from the mutually coupled position to the at least partially released position. In order to prevent container member 4 being co-displaced and thus moving during such an operation, container member 4 is provided with means which limit sliding, such as for instance anti-slip studs. In order to remove relatively easily from chamber 5 any residues possibly left behind in chamber 5, in particular residues of a starting product received in a disposable pouch, container member 4 is washable, and can preferably be washed in a dishwashing machine. Container member 4 can then be reused in clean state.

Although not shown in this exemplary embodiment, container member 4 can comprise closing means, such as for instance a valve member, for the purpose of fully airtight and leak-proof closing of chamber 5, so that the freshness of a starting product can be guaranteed for a longer period.

Although the invention has been further elucidated on the basis of an exemplary embodiment, it will be apparent that the invention is by no means limited thereto. On the contrary, many variations and embodiments are still possible within the scope of the invention for a person with ordinary skill in the art. More than one container member can thus be applied in a device for the purpose of even more storage space. In this case the container members can for instance be placed on top of each other under the device, wherein an uppermost container member is coupled to a bottom part of the device. It is also possible to apply a container member with more than one chamber so that a plurality of product containers can be stored separately of each other. A container member can for instance thus comprise two chambers, wherein a reusable filter device is stored in a first of the two chambers and one or a number of disposable pouches is stored in a second of the two chambers.

## Claims

1. Device for preparing a hot beverage, comprising a preparation chamber for receiving a starting product therein, which preparation chamber comprises an inlet for a liquid which during operation is introduced at increased temperature into the preparation chamber with the starting product, and an outlet for receiving thereat during operation a beverage formed from the starting product and the liquid, wherein the starting product can be placed in the preparation chamber together with at least one product container, and comprising a bottom part for the purpose of supporting therewith on a surface, **characterized in that** the bottom part is coupled to a container member having at least in cross-section at least substantially the same form, that the container member comprises at least one manually openable chamber, and that the at least one chamber is adapted to receive at least the at least one product container therein.

2. Device as claimed in claim 1, **characterized in that** the product container comprises a disposable pouch in which the starting product is enclosed.

3. Device as claimed in claim 1 or 2, **characterized in that** the product container comprises a reusable filter device.

4. Device as claimed in one or more of the foregoing claims, **characterized in that** the container member is coupled for manual release to the bottom part.

5. Device as claimed in one or more of the foregoing claims, **characterized in that** the container member comprises a drawer element with the at least one chamber, wherein the drawer element is manually slidable between a mutually coupled position of the drawer element and another part of the container member and an at least partially released position.

6. Device as claimed in claim 5, **characterized in that** the container member comprises spring means for carrying the drawer element in driven manner from the mutually coupled position to the at least partially released position.

7. Device as claimed in one or more of the foregoing claims, **characterized in that** locking means are provided between the container member and the bottom part for mutual locking thereof.

8. Device as claimed in one or more of the foregoing claims, **characterized in that** in a mutually coupled position of the container member and the bottom part the at least one chamber is closed in at least substantially wholly airtight and leak-proof manner.

9. Device as claimed in claim 8, **characterized in that** the container member comprises closing means for the purpose of closing the at least one chamber in at least substantially wholly airtight and leak-proof manner.

10. Device as claimed in one or more of the foregoing claims, **characterized in that** the container member is washable.

11. Device as claimed in one or more of the foregoing claims, **characterized in that** the container member comprises at least one further chamber for receiving at least one further product.

12. Device as claimed in one or more of the foregoing claims, **characterized in that** at least two containers are provided for the purpose of receiving individual further products.

13. Device as claimed in one or more of the foregoing claims, **characterized in that** the container member comprises at least one gripping element on a front side.

14. Device as claimed in one or more of the foregoing claims, **characterized in that** the container member is provided on an underside with means which limit sliding, in particular anti-slip studs.

15. Container member for application in a device as claimed in one or more of the foregoing claims.
